# EUROPÄISCHE PATENTSCHRIFT

(11) **EP 0 577 803 B1**
(45) Veröffentlichungstag und Bekanntmachung des Hinweises auf die Patenterteilung: **17.04.1996**
(21) Anmeldenummer: 93902242.2
(22) Anmeldetag: 22.01.1993
(51) Int. Cl.: F16L 33/00

(54) **ANSCHLUSSSTUTZEN**
PIPE SOCKET
TUBULURE DE RACCORDEMENT

(30) Priorität: 23.01.1992 DE 4201799
(43) Veröffentlichungstag der Anmeldung: 12.01.1994
(73) Patentinhaber: WOCO Franz-Josef Wolf & Co., D-63628 Bad Soden-Salmünster (DE)
(72) Erfinder: WOLF, Franz, Josef, D-6483 Bad Soden-Salmünster (DE); REICHERT, Uwe, D-36381 Schlüchtern (DE); SIMON, Bastian, D-6490 Schlüchtern (DE)
(74) Vertreter: Jaeger, Klaus, Dr.
(86) Internationale Anmeldenummer: EP9300144
(87) Internationale Veröffentlichungsnummer: WO9315347

(56) Entgegenhaltungen:
- DE-A- 3 243 365
- FR-A- 816 069
- FR-A- 1 549 540

## Beschreibung

Die Erfindung betrifft einen Anschlußstutzen für Verbindungsstücke für Schläuche und Rohre, insbesondere für kalt aufzuschlagende Kunststoffrohre der im oberbegriff des Patentanspruchs 1 genannten Art.

Die "Verbindungsstücke" im Sinne der Erfindung können dabei unterschiedlichster Art sein, beispielsweise als Kupplungsteile, Steckverbindungsteile, Geräteanschlüsse oder Aggregateanschlüsse ausgebildet sein. Wesentlich ist lediglich, daß sie einen Anschlußstutzenabschnitt tragen, dessen Außenprofil im Radialschnitt komplementär zum Innenprofil des anzuschließenden Schlauches oder Rohres, in der Regel also zylindrisch, ausgebildet ist.

Weiterhin ist im folgenden davon ausgegangen, daß ein "Schlauch" ein ausgeprägt elastisches Rohr ist, so daß also aus Gründen der besseren Lesbarkeit nachstehend nur noch von einem "Rohr" die Rede ist. das zum Zweck der Herstellung einer fluiddichten Verbindung auf den Anschlußstutzen aufschiebbar oder aufschlagbar ist.

Rohranschlüsse dieser Art weisen den großen Vorteil auf, mit geringem Montageaufwand rasch und kostengünstig herstellbar zu sein. Sie weisen jedoch auch den Nachteil auf. bei mechanischdynamischer Belastung für nur vergleichsweise begrenzte Zeit den anfänglichen Grad der verfügbaren Fluiddichtheit beizubehalten. Neben den einwirkenden Zugkräften spielt eine Relativverdrehung des Rohrendes gegenüber dem Anschlußstutzen eine wesentliche Rolle beim Undichtwerden der Verbindungen zwischen einem Rohrende und einem Verbindungsstück über einen Anschlußstutzen.

Dies trifft in erhöhtem Maße für Leitungssysteme zu, die in der Pneumatik, beispielsweise für Unterdrucksteuerungen, eingesetzt werden. Bereits geringfügige Leckkanäle können in diesem Anwendungsbereich zu Steuerungsausfällen führen.

Aus den genannten Gründen ist es insbesondere im Bereich pneumatischer Rohrleitungssysteme von eminenter Bedeutung, für Verbindungen zwischen einem Rohrende und einem Anschlußstutzen eines Verbindungsstückes für eine drehsichere Verbindung zwischen dem Rohr und dem Anschlußstutzen zu sorgen.

Aus der deutschen Patentschrift DE 31 22 709 C2 ist eine Schlauchkupplung bekannt, die zum Anbringen eines Schlauches an einem der Kupplungsteile einen Anschlußstutzen aufweist, der rohrseitig zu Dichtzwecken eine Ringkantenverrippung und geräteseitig zur Herstellung einer Verdrehsicherung einen Schneidzahnkranz mit zumindest im wesentlichen axialer Wirkrichtung und Ausrichtung aufweist. Der auf diesen Anschlußstutzen aufgeschobene Schlauch ist durch eine außen über den Schlauch aufgezogene Überwurfmutter in die Stutzenverrippung eingepreßt.

Problematisch bei dieser Art der Schlauch-Stutzen-Verbindung ist die Klemmhülse, die nicht nur konstruktiv und im Hinblick auf die Herstellung der Verbindung umständlich und kostenaufwendig ist, sondern konstruktiv auch relativ hoch-elastische Schläuche mit vergleichsweise niedrigem Druckverformungsrest voraussetzt.

Für die insbesondere in der pneumatischen Anlagetechnik verwendeten Rohre aus Kunststoffen wie vor allem Polyamid oder HD-Polyethylen, die weder gummielastisch noch starr sind, sondern ein nicht-hook'sches Rückstellverhalten mit teils beachtlicher Relaxation aufweisen, sind die aus der DE 31 22 709 A1 bekannten Schlauch-Anschlußstutzen-Preßmuffe-Verbindungen nicht brauchbar. Zwar wäre prinzipiell eine durchaus taugliche Verbindung zwischen einem Rohrende und dem aus dem Stand der Technik bekannten Anschlußstutzen auch ohne Überwurf-Anpreßhülse herstellbar, jedoch bereits nur unter Schwierigkeiten ohne thermisches Aufweiten mit anschließender Schrumpfung, und wohl kaum dann, wenn eine so hergestellte Verbindung mechanischer Belastung, insbesondere einer Torsionsbelastung, ausgesetzt ist.

Auch spielt in jenen Anwendungsbereichen, in denen solche Anschlußstutzen-Rohr-Verbindungen in großer Zahl benötigt werden, der Werkstoff, aus dem das Verbindungsstück mit dem Anschlußstutzen besteht, eine durchaus wesentliche Rolle. Wenn die Teile wie beispielsweise in der Automobiltechnik für die Pneumatiksteuerung der verschiedensten Verriegelungen und Einstellungen in großen Serienstückzahlen benötigt werden, besteht zumindest der Anschlußstutzen und vorzugsweise auch das Verbindungsstück selbst zweckmäßigerweise aus Kunststoff und ist durch Spritzgießen hergestellt. Wegen der tiefen axialen und radialen Einschnitte zwischen den verschiedenen Halte-Ringstegen werden solche Anschlußstutzen zweckmäßigerweise aus einem Spritzgießwerkzeug hergestellt, in dessen Trennfläche die Längsachse des Anschlußstutzens fällt. Dies bedeutet, daß solcherart aus Kunststoff durch Spritzgießen hergestellte Anschlußstutzen auf der Verrippung Formtrenngrate aufweisen. Selbst wenn daher das Rohr im Bereich des Verdrehsicherungszahnkranzes drehfest auf dem Anschlußstutzen fixiert ist, bleibt es im Bereich der dichtenden Ringrippenfirste durch die Tordierbarkeit des Rohres selbst auf diesen Ringrippen des Anschlußstutzens zumindest in dem Ausmaß verdrehbar, daß die Formtrenngrate oder deren verbliebene Reste Leckkanäle erzeugen, die bei Anwendungen im Bereich pneumatischer Rohrleitungssysteme zu fehlerhaften Leckschaltvorgängen führen.

Ausgehend von diesem Stand der Technik liegt der Erfindung die Aufgabe zugrunde, einen Anschlußstutzen für Verbindungsstücke für Schläuche und Rohre, insbesondere für kalt aufzuschlagende Kunststoffrohre, die speziell nicht hook'sche elastische Kenndaten aufweisen, zu schaffen, die auch dann, wenn die Stutzenverrippung noch Formtrenngrate oder deren Reste aufweist, ohne zusätzliche Spannmittel auch bei Torsionsbelastung der Rohrverbindung mit dem Anschlußstutzen dauerhaft dicht bleibt.

Zur Lösung dieser Aufgabe schafft die Erfindung einen Anschlußstutzen, der die im Patentanspruch 1 genannten Merkmale aufweist.

Ausgestaltungen der Erfindung sind Gegenstand der Unteransprüche.

Erfindungswesentlich wird die der Erfindung zugrunde liegende Aufgabe also durch die Kombination zweier Merkmale gelöst, nämlich dadurch, daß, von der Rohrseite her gesehen, die der Verdrehsicherung dienende Axialstegverrippung axial vor der der Dichtung dienenden Ringverrippung auf dem zylindrischen Schaft des Anschlußstutzens angeordnet ist, und daß die durch die Ringverrippung bewirkte Dichtung zwischen Rohrinnenwandfläche und Stutzenaußenmantel nicht wie beim Stand der Technik durch eine Ringkantendichtung, sondern durch eine Flächendichtung herbeigeführt wird. Dies letzte Merkmal bedeutet, daß im Axialprofil die Ringverrippung nicht als Sägezahnprofil mit spitzwinkligen Firstringen, sondern als axial vergleichsweise breiter Zylinderring ausgebildet ist.

Bei dieser Anordnung werden zum einen zwischen dem Anschlußstutzen und dem aufgeschlagenen Rohr wirksame Torsionskräfte in axialer Richtung vom Rohr her gesehen bereits außen vor der zylindrischen Dichtfläche abgefangen, so daß solcherart wirkende Torsionsskräfte axial nicht mehr in die Dichtfläche zwischen der zylindrischen Flächendichtung des Anschlußstutzens und des Rohrendes gelangen können. Zum anderen sind die Kanalbildungstendenzen über den aktiven Dichtbereich hinweg bei fehlender Relativtorsion zwischen den beiden aufeinander gepreßten Dichtflächen bei einer Flächendichtung über einen relativ weiten axialen Bereich durch Verformungs- und Kriecheffekte ebenso wie durch Labyrintheffekte praktisch ausgeschaltet, während identische Grate bei Ringkantendichtungen insbesondere bei nicht gummielastischen Werkstoffen sofort zu signifikanten Leckagen führen, und zwar verstärkt dann, wenn das Rohr auf der scharfkantigen Ringkante selbst nur im Bereich weniger Winkelsekunden verdrehbar bleibt.

Bei dieser Ausgestaltung des Anschlußstutzens können die der Verdrehsicherung dienenden Axialstegrippen grundsätzlich in herkömmlicher Weise auch, wie aus dem Stand der Technik bekann, scharfkantig ausgebildet sein. In diesem Fall ist jedoch sorgfältig darauf zu achten, daß der maximale Außendurchmesser der Axialstegverrippung und dessen axiale Erstreckung sowie dessen axialer Abstand zur Ringverrippung so aufeinander abgestimmt sind, daß das über die Axialverrippung auf die Ringverrippung kalt aufgeschlagene Rohr bei diesem Vorgang keine so tiefen Einschnitte erhält, daß aufgrund dieser Einschnitte selbst die der Axialverrippung axial folgende Ringflächenrippung undicht wird.

Um solche Probleme auch im Ansatz zu vermeiden, wird auch die Außenmantelgestaltung der Axialverrippung nach einer Ausgestaltung der Erfindung vorzugsweise so gestaltet, daß die Außenmantelfläche der Axialverrippung ohne Schneidkanten und Krallen breitflächig und vorzugsweise mit Anfasungen oder abgerundeten Kanten ausgebildet ist. Die Außenkanten der Axialverrippung sind daher vorzugsweise vergleichsweise breite Tangentialflächen oder Zylyinderflächen und im Fall der Ausgestaltung als Zylinderflächen vorzugsweise dergestalt als Zylindermantelteilflächen ausgestaltet, die Teile einer zur Rohrachse und zur Anschlußstutzenachse koaxialen Zylindermantelfläche sind.

Bei dieser Ausgestaltung der Axialverrippung, die im Extremfall dann kaum noch als Axialverrippung, sondern besser als Verdrehsicherungszylinderring mit axialen Einschnitten beschrieben werden kann, wird die Sicherung gegen ein Verdrehen des Anschlußstutzens gegenüber dem Rohr nicht dadurch erreicht. daß sich messerscharfe Kanten oder Krallen in die Rohrinnenwand einschneiden oder eingraben, sondern dadurch, daß die Rohrmantelwand in die axiale Ausnehmung zwischen zwei benachbarte Zylinderringsegmente oder Axialstege einsinkt. Insbesondere wenn die solcherart ausgebildete Axialverrippung einen maximalen Außendurchmesser aufweist, der kleiner oder höchstens gleich dem Außendurchmesser der Dichtringverrippung ist, ist ein verletzungssicheres kaltes Aufschlagen auch kaum noch nennenswert elastischer Kunststoffrohre über die vorgeschaltete Verdrehsicherung auf die Ringflächendichtung ohne jede Verletzung der Rohrinnenwand gewährleistet.

Nach einer weiteren Ausgestaltung der Erfindung ist der Anschlußstutzen bei exakt zylindrischer Innenmantelwand von seinem rohrseitigen Ende zum geräteseitigen Ende hin mit allmählich zunehmender Wandstärke dergestalt ausgebildet, daß der Anschlußstutzen in dieser Richtung insgesamt als sich schwach öffnender Kegelmantel ausgebildet ist. Erst mit dem Beginn der eigentlichen zylindrischen Dichtfläche des Anschlußstutzens (wiederum gesehen vom rohrseitigen Ende des Anschlußstutzens her) ist nach dieser Ausgestaltung der Erfindung auch die Außenkontur des Anschlußstutzens exakt zylindrisch ausgebildet.

Schließlich ist nach einer weiteren Ausgestaltung des Anschlußstutzens die axial der Dichtfläche vorgeschaltete Axial-Verrippung im Axialprofil vorzugsweise ohne Radialkanten und ohne mehr oder minder steile Radialflankenflächen, sondern kontinuierlich und flach ansteigend bis zu einem Maximum des Außendurchmessers der Axialverrippung mit anschließendem flachen Abfall zum Beginn der Dichtfläche hin, insgesamt also angenähernd birnenförmig, ausgebildet. Dabei ist der größte Außendurchmesser der Axialverrippung vorzugsweise kleiner, und zwar um bis zu 10 oder 20 % kleiner, oder höchstens gleich dem Außendurchmesser der sich axial zur Geräteseite hin anschließenden zylindrischen Dichtfläche des Anschlußstutzens.

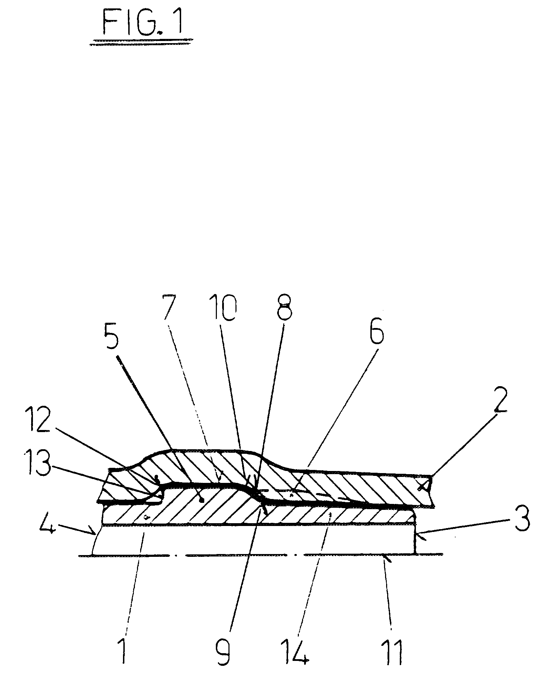

Die Erfindung ist im folgenden anhand eines Ausführungsbeispiels in Verbindung mit der Zeichnung näher erläutert. Dabei zeigt die einzige Figur, nämlich die
- Fig. 1: im Axialschnitt die funktionswesentlichen Elemente eines Anschlußstutzens nach einem Ausführungsbeispiel der Erfindung mit einen kalt aufgeschlagenen Rohrabschnitt.

In der Fig. 1 ist im Axialschnitt ein Anschlußstutzen 1 dargestellt, auf den ein Rohr 2 aus HDPE von der Rohrseite 3 her zur Geräteseite 4 hin aufgeschlagen ist. Dabei eignet sich der hier benutzte Rohrwerkstoff HDPE (hochdichtes Polyethylen) neben weichgemachten PA-6 und PA-12 speziell zum sogenannten Kaltaufschlagen der Rohre auf Anschlußstutzen der hier gezeigten Art.

Der Anschlußstutzen 1 trägt als Verbindungsfunktionselemente nach radial auswärts ringförmig vorspringend eine Ringrippung 5 und eine Axialstegrippung 6. Die Axialstegrippung 6 liegt in axialer Richtung von der Rohrseite 3 her zur Geräteseite 4 hin gesehen, also in Aufschubrichtung oder Aufschlagrichtung des Rohres 2, vor der Ringrippung 5.

Die Ringrippung 5 ist als zylindrischer Ringwulst mit einer axial relativ breiten zylindrischen Dichtfläche 1 ausgebildet. Zur Rohrseite 3 hin weist die Ringrippung 5 einen flachen Auflaufkonus 8 auf, der mit kantenfreien gerundeten Übergangsabschnitten 9,10 vom rohrseitigen Ende des Anschlußstutzens 1 in die eigentliche zylindrische Dichtfläche 7 übergeht. Der Kegelöffnungswinkel zwischen der Anschlußstutzenachse 11 und der Kegelmantelfläche 8 liegt dabei vorzugsweise im Bereich von kleiner als 45 .

Zur Herstellung einer verbesserten Zugfestigkeit der Steck- oder aufschlagverbindung zwischen dem Anschlußstutzen 1 und dem Rohr 2 endet die Dichtfläche 7 geräteseitig mit einer zumindest im wesentlichen rechtwinkeligen Kante 12, die zwischen der zylindrischen Dichtfläche 7 und einer geräteseitigen kreisringförmigen Radialfläche 13 ausgebildet ist. Entgegen dem herkömmlichen Stand der Technik empfiehlt es sich dabei nicht, radial über die Dichtfläche hinausspringende scharfkantige Krallen oder Zähne oder Ringkanten vorzusehen, um ein Einreißen des Rohres auch bei Dauerbelastung sicher zu vermeiden, da das Rohr auf den Anschlußstutzen gemäß der Erfindung durch keine zusätzlichen Spannmittel oder Sicherungsmittel oder Überschubhülsen geschützt, zusätzlich fixiert und gesichert ist.

Die Axialstegverrippung 6 besteht aus insbesondere 3 bis 8 in axialer Richtung verlaufenden radial auswärts vorspringenden Stegen, die auch als Segmente eines axial vor dem Dichtflächenring 5 angeordneten zweiten Wulstringes beschrieben werden können. Bei einer Ausgestaltung des Anschlußstutzens 1 mit einer aus 4 Axialstegen bestehenden Axialstegverrippung 6 weist jeder einzelne Steg vorzugsweise eine Winkelbreite von rund 30 auf, so daß zwischen jeweils benachbarten Stegen jeweils ein axial verlaufender radial einwärts zurückspringender nutartiger Schlitz entsteht, in den hinein sich die Innenwand des aufgeschlagenen Rohres 2 zurückstellt, und zwar in der aus Fig. 1 ersichtlichen Weise, von den in Fig. 1 nicht dargestellten Randbereichen abgesehen, bis zur vollflächigen Auflage auf dem Außenmantel des Anschlußstutzens 1. Auf diese Weise wird eine schneidenfreie formschlüssige Verdrehsicherung erreicht, die von der Rohrseite 3 her in die Stutzen-Rohr-Verbindung einlaufenden Torsionskräfte zuverlässig vor der Dichtfläche 7 auffängt.

Im Radialschnitt weisen die Stege der Axialstegverrippung 6 Zylinderteilflächen auf, die gemeinsam wieder auf einer koaxial zur Zentralachse 11 des Anschlußstutzens 1 definierten Zylindermantelfläche liegen. Die axial verlaufenden Längskanten der Stege sind sorgfältig abgerundet.

Im Axialprofil weist die Axialstegverrippung 6 insgesamt eine sehr flach verlaufende eiförmige oder birnenförmige Kontur auf, und zwar dergestalt, daß der größte Durchmesser dieser Profilkontur der Axialverrippung 6 vor dem Beginn der zylindrischen Dichtfläche 7 liegt.

Insgesamt weist also die der Verdrehsicherung des Rohres 2 gegenüber dem Anschlußstutzen 1 dienende Axialstegverrippung an keiner Stelle scharfe Kanten, Schneiden, Krallen oder Zähne auf.

Auf diese Weise ist die in Fig. 1 dargestellte und vorstehend beschriebene Aufschlagverbindung zwischen einem verrippten Anschlußstutzen und einem Rohr 2 in bislang nicht gekannter Weise unempfindlich gegen Torsionsbeanspruchungen, gegen ungleichmäßige Wandstärken des Anschlußstutzens 1, auch unempfindlich gegen Unrundungen des Anschlußstutzens 1, unempfindlich gegen Temperaturschwankungen im Bereich von -40 °C bis +110 °C und bedarf keiner zusätzlichen Dichtelemente, obwohl diese Verbindung vollkommen ohne zusätzliche Sicherungselemente wie beispielsweise Klemmringe, Schlauchschellen, Spannzähne oder Überwurfmuttern auskommt.

Dabei ist als weiterer wesentlicher Vorteil der in Fig. 1 dargestellten Verbindung zwischen dem Anschlußstutzen 1 und dem Rohr 2 anzusehen, daß die Montage dieser Verbindung einfach, rasch und kostengünstig ohne zusätzlichen mechanischen oder thermischen Aufwand erfolgen kann. Eine solche leichte Montage ist dabei wesentlich durch die Profilierung der beiden Verrippungen des Anschlußstutzens 1, nämlich durch die Profilierung der Radialverrippung 5 und der Axialstegverrippung 6 bewirkt. Als weiteres Element für eine einfache Montage kommt hinzu, daß in der ebenfalls aus Fig. 1 ersichtlichen Weise der rohrseitige Abschnitt 14 des Anschlußstutzens 1 von der rohrseitigen Stirnseite bis zum übergang 9 in die Kegelfläche 8 schwach konisch ausgebildet ist, und zwar mit einem Öffnungswinkel gegen die Zentralachse 11 im Bereich zwischen vorzugsweise 5 bis 20°.

## Patentansprüche

1. Anschlußstutzen eines Verbindungsstücks für Schläuche und Rohre, insbesondere für kalt aufzuschlagende Kunststoffrohre, die speziell nicht-hook'sche elastische Kenndaten aufweisen, der auf einem zylindrischen Stutzenabschnitt zu Dichtzwecken eine Ringrippung (5) und zur Herstellung einer verdrehgesicherten Verbindung zwischen dem Anschlußstutzen (1) und dem Rohr (2) eine Axiaistegrippung (6) aufweist,
dadurch **gekennzeichnet,**
dass, von der Rohrseite (3) her gesehen, die Axialstegrippung (6) axial vor der Ringrippung angeordnet ist, und dass die Ringrippung (5) nicht als Ringkantenrippung, sondern als Zylinderring-Dichtflächenrippung (7) ausgebildet ist.

2. Anschlußstutzen nach Anspruch 1,
dadurch **gekennzeichnet,**
dass die Axialstegrippen (61 der Verdrehsicherung radial aussen nicht als Schneid- oder Krallenkanten, sondern als Tangentialflächen oder Zylinderflächen ausgebildet sind.

3. Anschlußstutzen nach Anspruch 2,
dadurch **gekennzeichnet,**
dass die Tangentialflächen der Axialstegrippen (6) durch abgerundete oder abgefaste Kanten begrenzt sind.

4. Anschlußstutzen nach Anspruch 2,
dadurch **gekennzeichnet,**
dass die Zylinderflächen der Axialstegrippen (6) Zylindermantelteilflächen einer zur Stutzenachse (11) und zur Achse koaxialen Zylindermantelfläche sind.

5. Anschlußstutzen nach einem der Ansprüche 1 bis 4,
dadurch **gekennzeichnet,**
dass die Axialstegrippen als Zylindersegmentwulstring so ausgebildet sind, dass die sich zumindest im wesentlichen axial erstreckenden Axialeinschnitte im Umfangsmass ausreichend breit sind, um unter den jeweils im Einzelfall gegebenen Parametern ein Einsinken oder Eintauchen des Rohrwandungsmaterials in diese Axialeinschnitte dauerhaft zu gewährleisten.

6. Anschlußstutzen nach einem der Ansprüche 1 bis 5,
dadurch **gekennzeichnet,**
dass der Anschlußstutzen (1) ein Kunststoffspritzgießteil ist.

7. Anschlußstutzen nach einem der Ansprüche 1 bis 6,
dadurch **gekennzeichnet,**
dass der Außenmantel des Anschlußstutzens im axialen Verlauf von der Rohrseite (3) her zur Geräteseite (4) hin von der Stirnseite bis zum Beginn der wirksamen Dichtringfläche (7) insgesamt schwach konisch, und zwar in dieser Richtung sich öffnend, ausgebildet ist (14).

8. Anschlußstutzen nach einem der Ansprüche 1 bis 7,
dadurch **gekennzeichnet,**
dass das Axialprofil der Axialstegrippen (6) im axialen Verlauf von der Rohrseite (3) her zur Geräteseite (4) hin ohne Radialkantenbildung und ohne Radialflankenbildung kontinuierlich flach ansteigend ausgebildet ist.

9. Anschlußstutzen nach einem der Ansprüche 1 bis 8,
dadurch **gekennzeichnet,**
dass das Axialprofil der Axialstegrippen (6) im axialen Verlauf von der Rohrseite (3) her zur Geräteseite (4) hin ohne Radialkantenbildung und ohne Radialflankenbildung kontinuierlich flach ansteigend dergestalt ausgebildet ist, dass der Außendurchmesser axial vor der zylindrischen Dichtfläche (7) ein flaches Maximum durchläuft und zum Beginn der Dichtfläche (7) hin wieder abnimmt, so dass die Axialstegrippung insgesamt also eine angenähert birnenförmige Umhüllende aufweist.

10. Anschlußstutzen nach Anspruch 9,
dadurch **gekennzeichnet,**
dass der grösste Außendurchmesser der Axialrippen (6) kleiner oder höchstens gleich dem Außendurchmesser der zylindrischen Dichtfläche (7) des Anschlußstutzens (1) ist.

## Claims

1. A connecting socket of a connecting piece for tubes and pipes, in particular plastic pipes to be cold-fitted, especially having non-hook elastic characteristics, comprising a ring ribbing (5) on a cylindrical socket portion for sealig purposes and an axial web ribbing (6) for creating a torque-locked connection between the connecting socket (1) and the pipe (2),
**characterized** in that
the axial web ribbing (6) is placed in front of the ring ribbing, seen from the pipe side (3) and that the ring ribbing is not formed as a ring edge ribbing but as a cylinder ring sealing surface ribbing (7).

2. A connecting socket as claimed in claim 1,
**characterized** in that
the axial web ribs (6) of the torque lock are not formed as cutting or claw edges on the radially outer side but are formed as tangential surfaces or cylinder surfaces.

3. A connecting socket as claimed in claim 2,
**characterized** in that
the tangential surfaces of the axial web ribs (6) are delimited by rounded or bevelled edges.

4. A connecting socket as claimed in claim 2,
**characterized** in that
the cylinder surfaces of the axial web ribs (6) are partial surfaces of a cylinder jacket of a cylinder jacket surface coaxial to the socket axis (11) and the axis.

5. A connecting socket as claimed in one of claims 1 to 4,
**characterized** in that
the axial web ribs are formed as a bead ring of a cylinder segment such that the axial sections at least substantially axially extending are sufficiently wide regarding the peripheral dimension to lastingly ensure a sinking or submerging of the pipe wall materials into these axial sections under the parameters of each single case.

6. A connecting socket as claimed in one of claims 1 to 5,
**characterized** in that
the connecting socket (1) is a plastic injection moulding part.

7. A connecting socket as claimed in one of claims 1 to 6,
**characterized** in that
the outer jacket of the connecting socket in the axial extent from the pipe face (3) to the device face (4) is formed (14) in a generally slightly conical manner gapping in this direction from the front face to the beginning of the effective sealing ring surface (7).

8. A connecting socket as claimed in one of claims 1 to 7,
**characterized** in that
the axial profile of the axial web ribs (6) is formed continuously ascending in a flat manner in the axial extent from the pipe face (3) to the device face (4) without the formation of radial edges and radial flanks.

9. A connecting socket as claimed in one of claims 1 to 8,
**characterized** in that
the axial profile of the axial web ribs (6) is formed continuously ascending in a flat manner in the axial extent from the pipe face (3) to the device face (4) without the formation of radial edges or radial flanks such that the outer diameter axially in front of the cylindrical sealing surface passes through a flat maximum and descends again towards the beginning of the sealing surface (7) such that the axial web ribbing as a whole has an approachingly bulp-shaped envelope.

10. A connecting socket as claimed in claim 9,
**characterized** in that
the maximum outer diameter of the axial ribs (6) is smaller or at the most equivalent to the outer diameter of the cylindrical sealing surface (7) of the connecting socket (1).

## Revendications

1. Tubulure de raccord d'une pièce de jonction pour tuyaux flexibles et tubes, notamment pour des tubes en plastique à monter à froid, qui présentent en particulier des caractéristiques élastiques ne satisfaisant pas à la loi de Hooke, qui présente une nervure annulaire (5) sur une partie de tubulure cylindrique pour l'étanchéité et une nervure axiale à âme pleine (6) pour l'établissement d'une liaison à l'abri des torsions entre la tubulure de raccord (1) et le tube (2),
caractérisée en ce que, vu du côté du tube (3), la nervure axiale à âme pleine (6) est disposée axialement devant la nervure annulaire, et en ce que la nervure annulaire (5) n'est pas réalisée comme une rainure d'arête annulaire, mais comme une nervure pour surface d'étanchéité à bague cylindrique (7).

2. Tubulure de raccord selon la revendication 1, caractérisée en ce que les nervures axiales à âme pleine (6) de la sécurité de torsion ne sont pas réalisées radialement et extérieurement comme des arêtes de coupe ou des griffes, mais comme des surfaces tangentielles ou des surfaces cylindriques.

3. Tubulure de raccord selon la revendication 2, caractérisée en ce que les surfaces tangentielles des nervures axiales à âme pleine (6) sont limitées par des arêtes arrondies ou chanfreinées.

4. Tubulure de raccord selon la revendication 2, caractérisée en ce que les surfaces cylindriques des nervures axiales à âme pleine (6) sont les surfaces partielles d'enveloppe de cylindre d'une surface d'enveloppe de cylindre coaxiale par rapport à l'axe de la tubulure (11) et à l'axe du tube.

5. Tubulure de raccord selon l'une quelconque des revendications 1 à 4, caractérisée en ce que les nervures axiales à âme pleine se présentent sous la forme d'une bague à bourrelet à segment cylindrique de telle façon que les entailles axiales s'étendant au moins sensiblement axialement sont suffisamment larges dans la côte périphérique pour garantir de façon durable, avec les paramètres respectivement donnés dans chaque cas individuel, un enfoncement ou une immersion du matériau de la paroi du tube dans ces entailles axiales.

6. Tubulure de raccord selon l'une quelconque des revendications 1 à 5, caractérisée en ce que la tubulure de raccord (1) est une pièce en plastique moulée par injection.

7. Tubulure de raccord selon l'une quelconque des revendications 1 à 6, caractérisée en ce que, dans le tracé axial allant du côté du tube (3) en direction du côté de l'appareil (4), l'enveloppe extérieure de la tubulure de raccord a globalement une forme légèrement conique de la face avant jusqu'au début de la surface effective de la bague d'étanchéité (7), et ce en s'ouvrant dans cette direction (14).

8. Tubulure de raccord selon l'une quelconque des revendications 1 à 7, caractérisée en ce que, dans le tracé axial allant du côté du tube (3) en direction du côté de l'appareil (4), le profil axial des nervures axiales à nervure pleine (6) est réalisé avec une légère montée continue sans former d'arêtes radiales ni de flancs radiaux.

9. Tubulure de raccord selon l'une quelconque des revendications 1 à 8, caractérisée en ce que, dans le tracé axial allant du côté du tube (3) en direction du côté de l'appareil (4), le profil axial des nervures axiales à nervure pleine(6) est réalisé avec une légère montée continue sans former d'arêtes radiales ni de flancs radiaux de telle façon que le diamètre extérieur passe axialement devant la surface d'étanchéité (7) cylindrique par un maximum plat et décroît à nouveau en direction du début de la surface d'étanchéité (7), de sorte que la nervure axiale à âme pleine présente donc globalement une ligne enveloppante approximativement en forme de poire.

10. Tubulure de raccord selon la revendication 9, caractérisée en ce que le diamètre extérieur maximum des nervures axiales (6) est inférieur ou au plus égal au diamètre extérieur de la surface d'étanchéité (7) cylindrique de la tubulure de raccord (1).
